(19) Europäisches Patentamt
European Patent Office
Office européen des brevets

(11) **EP 2 779 294 A1**

(12) **EUROPEAN PATENT APPLICATION**
published in accordance with Art. 153(4) EPC

(43) Date of publication:
**17.09.2014 Bulletin 2014/38**

(51) Int Cl.:
**H01M 8/04** *(2006.01)*  **H01M 8/02** *(2006.01)*
**H01M 8/06** *(2006.01)*  **H01M 8/12** *(2006.01)*

(21) Application number: **12848218.9**

(22) Date of filing: **06.11.2012**

(86) International application number:
**PCT/JP2012/078723**

(87) International publication number:
**WO 2013/069632 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2011 JP 2011245894**

(71) Applicant: **JX Nippon Oil & Energy Corporation Chiyoda-ku Tokyo 100-8162 (JP)**

(72) Inventors:
• **IBUKA, Takeshi**
  **Tokyo 100-8162 (JP)**
• **SATO, Yasushi**
  **Tokyo 100-8162 (JP)**

(74) Representative: **Grünecker, Kinkeldey, Stockmair & Schwanhäusser Leopoldstrasse 4 80802 München (DE)**

(54) **METHOD AND DEVICE FOR STOPPING SOLID-OXIDE FUEL CELL SYSTEM**

(57)    A preferred stopping method for a SOFC system of the invention leads to an improvement in durability. The SOFC system houses a reformer (6) and a fuel cell stack (10) in a module case (2). Each cell (20) forming the fuel cell stack (10) is made of a porous material having a composition containing at least nickel metal, includes a cell support having a gas passage (22) through which the fuel gas from the reformer (6) flows from an lower end to an upper end on the inside thereof, and the cell (20) is formed by stacking a fuel electrode layer, a solid oxide electrolyte layer, and an air electrode layer on the cell support, and the excessive fuel gas is combusted at the upper end of the gas passage (22). Here, after the power generation stops, until the temperature of the maximum temperature portion (the upper end) of the fuel cell stack (10) falls below the minimum oxidation temperature of the nickel metal, the supply amount of the fuel gas to the fuel cell stack (10) is controlled in terms of a heat flow rate within a range of 0.1 to 0.5 times that during the system rated power generation.

*FIG. 1*

**Description**

TECHNICAL FIELD

The present invention relates to a method and apparatus for stopping an operation of a solid oxide fuel cell system (hereinafter, referred to as "SOFC system").

BACKGROUND ART

Attention has been focused on SOFC systems as a next-generation stationary power source with low $CO_2$ emissions, from the viewpoint of high power generation efficiency of SOFC systems. In recent years, technologies have been actively developed, and thus, a problem in durability caused by an operation at a high temperature of 600 to 1,000°C has been overcome. In addition, the operation temperature has steadily been reduced.
As such a SOFC system, a system disclosed in Patent Document 1 is known.
The system is configured to include a reformer that generates a hydrogen-enriched fuel gas (reformed gas) by a reforming reaction; a fuel cell stack (assembly of fuel cells) which allows reacting the fuel gas from the reformer with air to generate power; and a module case which surrounds the reformer and the fuel cell stack, in the inside of the module case, and excessive fuel gas is combusted to maintain the reformer and the fuel cell stack in a high temperature state. Incidentally, these components are substantial parts of the system and are collectively referred to as a hot module.
In addition, each cell constituting the fuel cell stack is an anode supported solid oxide fuel cell, and includes a cell support which is made of a porous substance having a composition containing at least nickel metal and is provided therein with a gas passage through which the fuel gas from the reformer passes from one end to the other end. The cell is configured by laminating a fuel electrode layer, a solid oxide electrolyte layer, and an air electrode layer on the cell support. Moreover, the reformer and the fuel cell stack are heated by combusting excessive fuel gas at the other end of the gas passage.

CITATION LIST

PATENT DOCUMENT

Patent Document 1: Japanese Patent No. 4565980

SUMMARY OF THE INVENTION

PROBLEMS TO BE SOLVED BY THE INVENTION

In stationary fuel-cell systems including a SOFC system, the system needs to be stopped at some frequency for various reasons, such as a user's choice, a purpose of exhibiting energy saving effect at a maximum, and a problem in a device or a utility.
Therefore, in order to put the SOFC system to practical use as a stationary power generation device, the SOFC system needs to have durability for about 10 years with the assumption that start-and-stop operation will be repeated.
An object of the invention is to provide a suitable method and apparatus for stopping a SOFC system that is able to avoid the abnormality occurrence and improve durability by paying attention to a correlation between the behavior at the time of stopping the SOFC system and the abnormality occurrence (cell damage and performance degradation).

MEANS FOR SOLVING THE PROBLEMS

The present inventors found that, in the fuel cell stack of the SOFC system, if the supply of reformed gas to the fuel cell stack is stopped after the power generation stops, air from the outside flows and is diffused into the fuel electrode of the fuel cell, and thus the cell support having a composition containing nickel metal is oxidized by the air in a high temperature state, and thus, it is likely that the fuel cell or the fuel cell stack will be damaged.
Moreover, they found that the degree of damage to the cell is dependent on the degree of oxidation of the cell support after the power generation stops, and the cell damage markedly occurs with increasing frequency at a certain degree of oxidation or more.
The oxidation degree of the cell support is a degree at which nickel metal in the cell support is oxidized due to air diffusion to the fuel electrode layer after the power generation stops, and the oxidation degree can be defined by using a Ni oxidation degree defined by the following formula.
Ni oxidation degree = (Number of moles of Ni atoms which are present as NiO among Ni atoms contained in the cell support) / (Number of moles of all Ni atoms in the cell support) x 100 (%)

However, it is difficult to measure the Ni oxidation degree by the actual device and to directly reflect the Ni oxidation degree in the control.

Therefore, the inventors have coped with problems as to how the power generation stop can be achieved without increasing the Ni oxidation degree, and as a result of further research, they have established a specific stopping method of allowing the Ni oxidation degree after the power generation stops to be suppressed within a predetermined threshold value in relation to, for example, a minimum oxidation temperature of nickel metal, and suggest the method this time.

The invention has been made under such circumstances, and is configured to control the supply amount of the fuel gas to the fuel cell stack within a range of 0.1 to 0.5 times that during a system rated power generation in terms of a heat flow rate, until the temperature of the maximum temperature portion of the fuel cell stack falls below a minimum oxidation temperature (about 400°C) of the nickel metal in the cell support after the power generation stops.

Furthermore, the invention is configured so that, when the temperature of the maximum temperature portion of the fuel cell stack reaches a minimum oxidation temperature, a temperature difference between the temperature of the maximum temperature portion of the fuel cell stack and the temperature of the reformer is within 80°C, by controlling the supply amount of air (cathode air flow rate) to the fuel cell stack within the range of 1.2 to 2.0 times that during the system rated power generation after the power generation stops.

EFFECT OF THE INVENTION

According to the invention, control is performed so that the supply amount of the fuel gas to the fuel cell stack to 0.1 times or more that during the system rated power generation in terms of a heat flow rate until the temperature of the maximum temperature portion of the fuel cell stack falls below the minimum oxidation temperature (about 400°C) of the nickel metal in the cell support, and thus, it is possible to cause the nickel metal in the cell support to be within a reducing atmosphere to suppress the oxidation thereof, and it is possible to secure the durability. Furthermore, by controlling the supply amount equal to or less than 0.5 times, the time that is required to fall below the minimum oxidation temperature after the power generation stops can be set within 5 hours, and in the SOFC system that performs the stop once a month or more, it is possible to secure maintenance characteristics and energy saving characteristics.

In addition, according to the invention, when the temperature of the maximum temperature portion of the fuel cell stack reaches the minimum oxidation temperature (about 400°C) by the control of the cathode air flow rate, by setting so that the temperature difference between the temperature of the maximum temperature portion of the fuel cell stack and the temperature of the reformer is within 80°C, when the temperature of the reformer reaches 250 to 320°C that are the minimum reformable temperature, the temperature of the maximum temperature portion of the fuel cell stack can be set to 400°C or less, thereby minimizing the oxidation to prevent the significant deterioration. That is, when the temperature of the reformer (reforming catalyst) reaches the minimum reformable temperature, although it is necessary that the temperatures of all parts of the fuel cell stack fall below the minimum oxidation temperature, it is possible to satisfy this.

BRIEF DESCRIPTION OF THE DRAWINGS

Fig. 1 is a longitudinal cross-sectional view schematically illustrating a hot module of a SOFC system according to an embodiment of the invention.
Fig. 2 is a transverse cross-sectional view of a fuel cell stack of the system in planar view.
Fig. 3 is a view illustrating a correlation between a Ni oxidation degree and a cell voltage drop rate.
Fig. 4 is a view illustrating a correlation between a Ni oxidation degree and a voltage drop rate after performing a start-and-stop operation 240 times.
Fig. 5 is a view illustrating a relationship between a maximum stack temperature at the time of stopping a reformed gas and a Ni oxidation degree.
Fig. 6 is a flowchart of stop control.
Fig. 7 is an explanatory view of an optimum range of a fuel heat flow rate during a stop process.
Fig. 8 is an explanatory view of an optimum range of an air flow rate during the stop process.
Fig. 9 is a view illustrating a temperature profile during the stop process.
Fig. 10 is a view illustrating a relationship between a temperature T1 and a temperature T4.

MODE FOR CARRYING OUT THE INVENTION

Hereinbelow, embodiments of the invention will be described in detail.

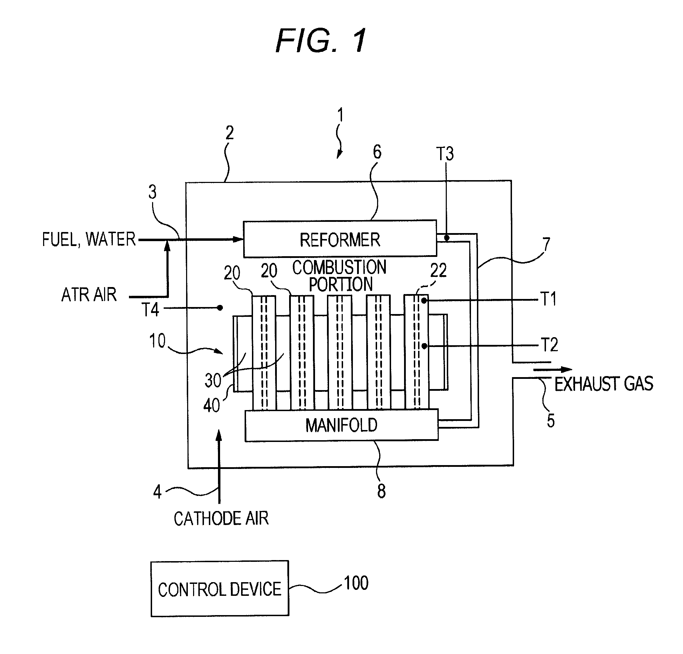

Fig. 1 is a longitudinal cross-sectional view schematically illustrating a hot module that is a substantial part of a SOFC system according to an embodiment of the invention.

A hot module 1 is configured to accommodate a reformer 6 and a fuel cell stack 10 in a module case 2.

The module case 2 is configured such that the inner surface of a rectangular-parallelepiped outer frame made of a heat-resistant metal is sealed with a heat insulation material. In addition, a supply tube 3 of fuel, water, and air for autothermal reforming reaction (ATR) and a supply tube 4 of air for cathode are provided from the outside into the case. Moreover, an exhaust port 5 is further included. As fuel (raw fuel), city gas, LPG, methanol, DME, kerosene and the like are used. Furthermore, the supply tube 3 of fuel, water, and ATR air, and the supply tube 4 of the cathode air are provided with supply amount control means (at least one of pump and control valve) (not illustrated) corresponding to each tube so as to be able to adjust the respective supply amounts of fuel, water, ATR air, and cathode air, and these means are controlled by the control signals from the control device 100 of the SOFC system.

The reformer 6 is disposed at the upper portion in the module case 2 (upper side of the fuel cell stack 10) and the supply tube 3 of fuel, water, and air for ATR from the outside is connected thereto.

The case of the reformer 6 is formed by a heat-resistant metal. A catalyst chamber that accommodates a reforming catalyst used for reforming a raw fuel such as city gas, LPG, methanol, DME, and kerosene to be a hydrogen-enriched fuel gas (reformed gas), and a water vaporizing chamber that vaporizes water for a steam reforming reaction using a reforming catalyst are formed in the case.

One end of a reformed gas supply tube 7 is connected to a reformed gas outlet 6a of the reformer 6, and the other end of the reformed gas supply tube 7 is connected to a hollow manifold 8 for distributing a reformed gas that is disposed at the lower side of the fuel cell stack 10.

The fuel cell stack 10 is disposed at the lower portion in the module case 2 (lower side of the reformer 6) and is held on the manifold 8.

The fuel cell stack 10 is an assembly of plural fuel cells 20. The plural longitudinal cells 20 (for simplicity, five cells are illustrated in Fig. 1) are arranged in a row in the transverse direction such that collector members 30 are interposed between the side surfaces of the cells 20. In the same manner, the plural cells 20 are arranged in a matrix form by arranging the plural cells in plural rows behind the row of Fig. 1.

A gas passage 22 is formed at the inside of each fuel cell 20 from the lower end to the upper end. The lower end of each gas passage 22 is communicated with the manifold 8, and a combustion portion used for an excess fuel gas is formed at the upper end thereof.

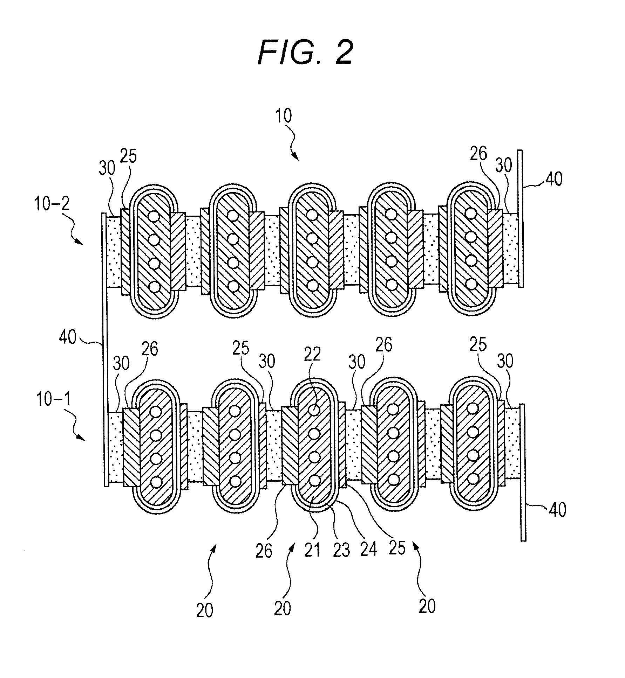

Next, each fuel cell 20 constituting the fuel cell stack 10 will be described with reference to Fig. 2.

Fig. 2 is a transverse cross-sectional view of the fuel cell stack in plane view.

The fuel cell 20 is an anode supported solid oxide fuel cell and includes a cell support 21 (provided with the gas passage 22), a fuel electrode layer 23, a solid oxide electrolyte layer 24, an air electrode layer 25, and an interconnector 26.

The cell support 21 is made of a porous substance having a composition including at least nickel metal. The cell support 21 is a plate-shaped piece having a flat oval transverse cross section and extending in the longitudinal direction (vertical direction), and has planar both side surfaces (planar surfaces) and semi-cylindrical front and rear surfaces. One end (lower end) of the cell support 21 is inserted to an opening of the upper surface of the manifold 8 to be fitted gas-tight thereto. The other end (upper end) is opposite to the lower surface of the reformer 6. The plural gas passages 22 which are arranged in parallel to each other and through which a reformed gas from the manifold 8 flows are provided in the inside of the cell support 21 from one end (lower end) to the other end (upper end) in the longitudinal direction.

The interconnector 26 is provided on one planar surface (at the left side of a fuel cell stack 10-1 of the first row in Fig. 2) of the cell support 21.

The fuel electrode layer 23 is laminated on the other planar surface (at the right side of the fuel cell stack 10-1 of the first row in Fig. 2) of the cell support 21 and on the front and rear surfaces and the both ends thereof are joined to both ends of the interconnector 26.

The solid oxide electrolyte layer 24 is laminated on the fuel electrode layer 23 so as to cover the entire fuel electrode layer 23, and each end of the solid oxide electrolyte layer are joined to each end of the interconnector 26.

The air electrode layer 25 is laminated on the main portion of the solid oxide electrolyte layer 24, that is, on a portion covering the other planar surface of the cell support 21 such that the air electrode layer 25 faces the interconnector 26 to interpose the cell support 21 therebetween. Therefore, the interconnector 26 is disposed on one outside surface (at the left side of the fuel cell stack 10-1 of the first row in Fig. 2) of each cell 20 and the air electrode layer 25 is disposed on the other outside surface (at the right side).

In other words, each cell 20 includes the cell support 21 having the gas passages 22 and is configured such that the fuel electrode layer 23, the solid oxide electrolyte layer 24, and the air electrode layer 25 are laminated in this order on one surface of the cell support 21 and the interconnector 26 is further formed on the other surface of the cell support 21.

The plural fuel cells 20 are arranged in the transverse direction and are joined in a row via the collector members 30. That is, as indicated in the fuel cell stack 10-1 of the first row in Fig. 2, the plural cells 20 in a row are connected with each other in series in such a manner that the interconnector 26 disposed at the left side of each cell 20 is joined to the air electrode layer 25 of the left adjacent cell 20 via the collector member 30 and the air electrode layer 25 disposed at the right side of each cell 20 is joined to the interconnector 26 of the right adjacent cell 20 via the collector member 30.

In addition, at the rear side of the fuel cell stack 10-1 of the first row in Fig. 2, a fuel cell stack 10-2 at the second row is provided, but in the fuel cell stack 10-2 of the second row, the cells 20 are arranged in a right-left reverse direction with respect to the fuel cell stack 10-1 of the first row.

The fuel cell stack 10-1 of the first row and the fuel cell stack 10-2 of the second row are connected with each other in series in such a manner that the collector member 30 attached to the interconnector 26 of the leftmost cell 20 of the fuel cell stack 10-1 of the first row and the collector member 30 attached to the air electrode layer 25 of the leftmost cell 20 of the fuel cell stack 10-2 of the second row are connected with each other by a conductive member 40.

In the hot module 1, a fuel for producing hydrogen such as city gas, LPG, methanol, DME, and kerosene, and water for reforming are supplied to the reformer 6 from the supply tube 3 of fuel, water, and air for ATR. In the reformer 6, a hydrogen-enriched fuel gas (reformed gas) is generated mainly by a steam reforming reaction. The generated reformed gas is supplied to the manifold 8 for distribution through the reformed gas supply tube 7.

The reformed gas supplied to the manifold 8 is distributed to the fuel cells 20 constituting the fuel cell stack 10, and is supplied to the gas passage 22 formed in a support 21 of each cell 20, and then ascends the gas passage 22. In this process, hydrogen in the reformed gas is permeated to the inside of the cell support 21 so as to reach the fuel electrode layer 23.

On the other hand, air (oxygen-containing gas) is introduced to the inside of the module case 2 from the supply tube 4 of air for a cathode and supplied to the fuel cells 20 constituting the fuel cell stack 10. Then, oxygen in air reaches the air electrode layer 25 of each cell 20.

According to this, in each fuel cell 20, the electrode reaction of the following Formula (1) occurs in the air electrode layer 25 at the outside, and the electrode reaction of the following Formula (2) occurs in the fuel electrode layer 23 at the inside, thereby generating power.

$$\text{Air electrode: } 1/2O_2 + 2e^- \rightarrow O^{2-} \text{ (solid electrolyte) ... (1)}$$

$$\text{Fuel electrode: } O^{2-} \text{ (solid electrolyte)} + H_2 \rightarrow H_2O + 2e^- \text{ ... (2)}$$

Among the reformed gas flowing through the gas passage 22 of the support 21 in the cell 20, the reformed gas which has not been used in the electrode reaction is allowed to flow out from the upper end of the support 21 to the inside of the module case 2. The reformed gas allowed to flow out to the inside of the module case 2 is allowed to be combusted at the same time of flowing out. An appropriate ignition means (not illustrated) is provided in the module case 2. Upon the reformed gas is started to flow out to the inside of the module case 2, the ignition means is allowed to be operated so as to start combustion. In addition, among the air introduced to the inside of the module case 2, the air which has not been used in the electrode reaction is used in combustion. The temperature in the module case 2 is increased to be a high temperature of, for example, about 600 to 1,000°C due to the power generation in the fuel cell stack 10 and the combustion of excessive reformed gas. The exhaust gas generated by the combustion in the module case 2 is exhausted from the exhaust port 5 to the outside of the module case 2.

The fuel cell 20 will be described in more detail.

The cell support 21 is demanded to have gas permeability (to be porous) for transmitting the fuel gas to the fuel electrode layer 23 and to have a conductive property for collecting power through the interconnector 26. The cell support 21 can be made of cermet satisfying such a demand. Specifically, the cell support 21 is made of a nickel cermet obtained by appropriately performing reduction treatment or the like on a complex oxide composition containing at least nickel oxide. The complex oxide composition may contain one or two or more kinds of metal oxide selected from at least scandium, yttrium, lanthanum, cerium, titanium, and zirconium, as components other than nickel oxide. Incidentally, by the reduction treatment, it is considered that components other than nickel oxide are not concerned with redox reaction substantially. In addition, in the complex oxide composition before the reduction treatment of the cell support 21, a ratio of the nickel oxide is set to be 50% by weight or more (50 to 90% by weight, and preferably 60 to 80% by weight).

A cell constituting layer which is formed on the cell support 21 will be further described.

The fuel electrode layer 23 is made of porous conductive ceramics.

The solid oxide electrolyte layer 24 needs to have a function as an electrolyte used to bridge electron conduction and ion conduction between electrodes and to have a gas barrier property in order to prevent leakage of a fuel gas and air. Generally, the solid oxide electrolyte layer 24 is made of a solid electrolyte containing oxide such as $ZrO_2$ and $CeO_2$. The air electrode layer 25 is made of conductive ceramics and has gas permeability.

The interconnector 26 may be made of conductive ceramics. However, since the interconnector 26 contacts a fuel gas and air, the interconnector 26 has a reduction resistance and an oxidation resistance. Furthermore, the interconnector 26 is a dense substance in order to prevent leakage of a fuel gas flowing through the gas passage 22 formed in the cell support 21 and air flowing to the outside of the cell support 21.

The collector member 30 is configured to include a member that has an appropriate shape and is made of an elastic metal or an alloy. The conductive member 40 can be made of an appropriate metal or alloy.

Incidentally, in the SOFC system as described above, the system needs to be stopped at some frequency for various reasons such as a user's choice, a purpose of exhibiting an energy saving effect at a maximum, or a problem in a device or a utility. Due to this stop process and the following restart process, various problems in durability occur.

In particular, after stopping the supply of the reformed gas to the fuel cell stack 10 in the stop process and before the fuel cell stack 10 has not completely cooled, air flows into the cell support 21 and the fuel electrode layer 23, so that a serious problem occurs due to the oxidation of the cell support 21 or occurs when the cell support 21 is reduced from the oxidation state by restarting.

Generally, if the oxidation and reduction of the cell support containing nickel is repeated, transformation such as expansion, contraction, or bending occurs in a cell, and thus, the cell itself is damaged, or a crack or gap is generated between the cell and a member adjacent to the cell. Therefore, there is a possibility that various problems are caused, such as a drop in a cell voltage or a temperature distribution change of the reformer according to a change in the combustion state in the upper portion of the cell.

It is considered that such problems occur due to the following mechanism as described below.

In the stop process of the SOFC system, the supply of the fuel gas (reformed gas) is generally continued even after the power generation is stopped. The fuel gas which has not been used in the power generation is reacted with air supplied from the circumference in the combustion space above the fuel cell stack 10 so as to be combusted, but the fuel cell stack 10 is gradually cooled down during this combustion. When the fuel cell stack 10 is cooled down to a set temperature, the supply of the raw fuel to the reformer 6 is stopped and the supply of the reformed gas to the fuel cell stack 10 is also stopped at the same time. Since the temperature of the reformer 6 is decreased in accordance with the temperature decrease of the fuel cell stack 10, there is a lower limit of the temperature at which the reformed gas is continuously supplied in response to the request of the reformer 6 such as a catalyst activity used in the reforming reaction or vaporization and dispersion of water used in reforming. Accordingly, the supply of the reformed gas needs to be stopped at any time point from a state of stopping power generation to a complete stop state in which the fuel cell stack 10 or the reformer 6 is cooled down to room temperature.

When the supply of the reformed gas is stopped, air supplied from the supply tube 4 of air for cathode passes through the gas passage 22 of the cell support 21 and then back diffusion of the air occurs. In view of the start of inflow of air and a temperature of the support of each unit of the fuel cell stack 10 at this time point, if inflow of air is started at or above a temperature at which nickel metal in the support 21 is subjected to oxidation, nickel is oxidized. Since the support 21 is a complex (cermet) of metal nickel and oxide ceramics, nickel metal in the support 21 is partially turned into nickel oxide. The cell is gradually cooled down through such a process, and eventually, the oxidation degree converges to a certain degree such that the system is completely stopped.

Next, when the system is restarted from a state in which nickel in the support 21 is partially oxidized, a raw fuel and water, and if needed, air for ATR, are introduced to the reformer 6, and then a hydrogen-containing reformed gas is supplied to the fuel cell stack 10 by a steam reforming reaction (SR) or a partial oxidation reaction (POX). According to this, most of the partially-oxidized nickel in the support 21 is returned to a state of metal nickel which is completely reduced again.

The present inventors found that there is a strong correlation between a case in which oxidation and reduction of nickel metal in the cell support 21 is repeated in this manner and a process from cell voltage drop to cell damage.

In other words, the present inventors found that the cell damage risk of the fuel cell stack as described above can be determined by the transition of the cell voltage, and came to a conclusion that the durability of the system is governed by the oxidation degree, by conducting a research on a correlation between the oxidation degree of the cell support after the power generation stops and the transition of the cell voltage and the cell damage.

Herein, regarding the nickel in the cell support 21, although the nickel is present as nickel oxide after calcining treatment and before reduction treatment of the support, most of the nickel is reduced to metal nickel by performing the reduction treatment after the cell configuration is completed or after the cells are constituted as a stack. However, this state is disrupted at the time when the reducing gas is stopped to flow in accordance with the stop of the fuel cell system, and a certain ratio of nickel atoms are oxidized by oxygen in air reversely diffused to the gas passage 22 in the cell support 21 such that the nickel is present as nickel oxide.

Therefore, in the present embodiment, a degree to which nickel metal in the cell support 21 is oxidized after stopping the power generation is considered as an index for durability evaluation. This oxidation degree is defined as a Ni oxidation degree by the following formula.

Ni oxidation degree = (Number of moles of Ni atoms that are present as NiO among Ni atoms contained in the cell support) / (Number of moles of all Ni atoms in the cell support) x 100 (%)

Herein, the Ni oxidation degree may be obtained by measuring the cell support with an instrumental analytical technique such as XRD or XPS. However, in a more direct manner, if the ratio of nickel contained in the cell support is already known, the Ni oxidation degree can be calculated from an increase and decrease in weight before and after performing a certain oxidation or reduction treatment.

In one example, it is known that, when the nickel metal in the cell support is subjected to air calcining for a sufficient time of 12h or more at a high temperature of approximately 900°C, almost all atoms are oxidized and are converted into a nickel oxide NiO. In the case of using a cell support in which a weight ratio of nickel oxide contained in the cell support after calcining treatment and before reduction treatment is 70%, when the cell support components other than nickel are not affected by the redox, the oxidation is performed at 900°C from the reduction state in which all nickel atoms are in a metallic state, and as a whole, there is a weight increase of $1/(1 - 16/(58.7 + 16) \times 0.7) = 1.176$ times, that is, a weight increase of 17.6%. Here, the atomic weight of nickel Ni was 58.7 and the atomic weight of oxygen O was 16.

However, since a part of the nickel atoms is already oxidized after the stop, when performing the oxidation at 900°C from the partial oxidization state after the stop, the weight increase is smaller than the abovementioned calculated value. That is, if 25% of the total nickel atoms is NiO after the stop, since the weight increase of $(1 + 0.176 \times 0.25) = 1.044$ times is already obtained by the conversion from the complete reduction state to the partial oxidization state, it remains in the weight increase of $1.176/1.044 = 1.126$ times, that is, the weight increase of 12.6%.

Thus, if the weight increase to the complete oxidization state is measured on the cell support after the stop (partial oxidization state), it is possible to know the weight increase from the complete reduction state to the partial oxidization state, based on the measured weight increase and the weight increase from the complete reduction state to the complete oxidization state, and it is possible to know the oxidation degree of the partial oxidization state, based on the ratio of the weight increase from the complete reduction state to the complete oxidization state to the weight increase from the complete reduction state to the partial oxidization state.

In the abovementioned example, by measuring the weight increase (1.126 times) from the partial oxidization state to the complete oxidization state, the weight increase from the complete reduction state to the partial oxidization state is $1.176/1.126 = 1.044$, and the Ni oxidation degree in the partial oxidization state is $(1.044 - 1)/(1.176 - 1) \times 100 = 25(\%)$.

the Ni oxidation degree in a partial oxidation state can be obtained by the following formula based on a maximum weight change ratio (increase ratio) $R_{max}$ (to be obtained in advance) from the complete reduction state to the complete oxidation state, and a weight change ratio (increase ratio) R2 from the partial oxidation state after stopping the power generation to the complete oxidation state.

$$\text{Ni oxidation degree} = ((R_{max}/R2) - 1) / (R_{max} - 1) \times 100 \ (\%)$$

Herein, $R_{max}/R2$ corresponds to a weight change ratio R1 from the complete reduction state to the partial oxidation state.

When the weight change is measured, the cell support itself may be used actually as a sample to perform the weight measurement, but it is more preferably to use a measuring instrument such as TG-DTA.

Furthermore, although the method of measuring the Ni oxidation degree of the support based on the weight increase according to the high-temperature oxidation has been illustrated in the abovementioned example, if there is a means capable of measuring a weight while a reducing gas such as hydrogen gas flow flows under heating, the Ni oxidation degree can be similarly calculated from a decrease in weight to the complete reduction. That is, the weight change ratio "$R1 = W_x/W_0$" from the complete reduction state to the partial oxidation state is obtained from a weight $W_x$ in the partial oxidation state and a weight $W_0$ in the complete reduction state, so that "Ni oxidation degree = $(R1 - 1) / (R_{max} - 1) \times 100 \ (\%)$" can be obtained. In a case in which the Ni oxidation degree is low, the above method may be more preferably used.

Therefore, in any case, the Ni oxidation degree can be obtained based on the change in weight (maximum weight change ratio) which has been determined in advance between the complete reduction state and the complete oxidation state and the change in weight (change ratio) from the partial oxidation state after the power generation stops to the complete oxidation or reduction state.

Next, a correlation between durability of the cell and a Ni oxidation degree, more specifically, a threshold value of the Ni oxidation degree that is an index of durability evaluation will be discussed.

In general, the durability of the cell is preferably monitored by a power generation voltage of the cell at the time of current sweep under a constant operation condition of the system. If any problem occurs in the cell stack structural body including the cell support or a peripheral member, even in a case of gas leakage due to cell support damage, an increase in resistance according to detaching of a cell laminated structure, degradation in the contact state with current collector metal according to cell deformation, or the like, the problem may be observed as a voltage drop of the cell stack in many cases. Therefore, durability (residual life) of the cell stack can be presumed by a change (drop) in the cell voltage with respect to the initial stage. In order to suppress such a cell voltage drop and maintain a cell voltage to be a sufficient level even after the start-and-stop operation is performed 240 times that is the practically usable number of times of the start-and-stop operation, it is necessary to suppress the Ni oxidation degree after the stop to be low.

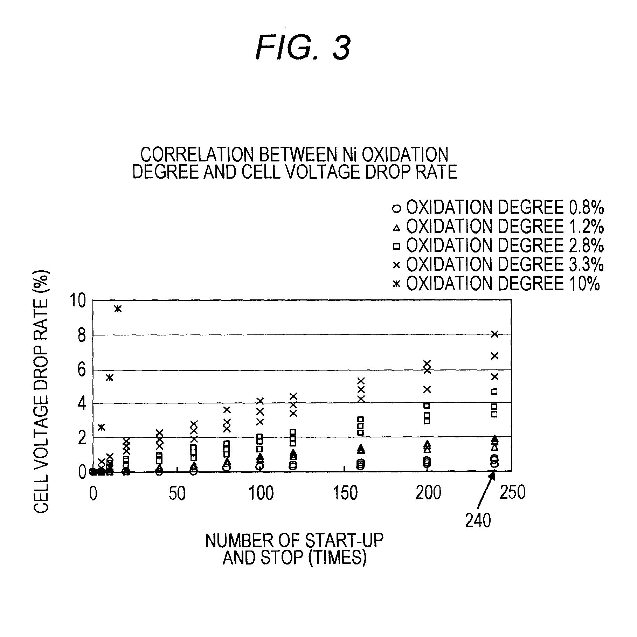

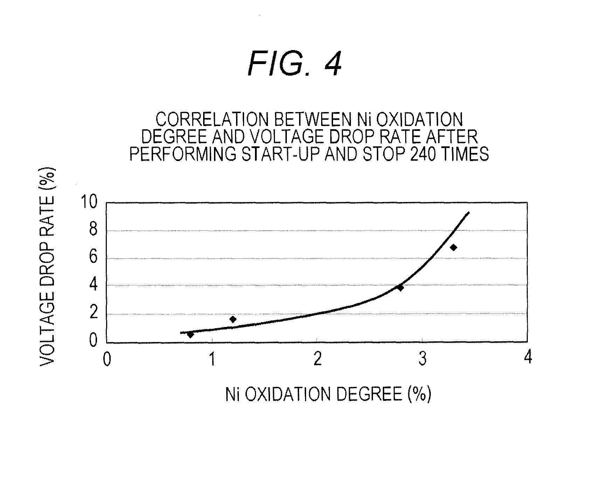

Fig. 3 illustrates a result obtained by plotting a change in cell voltage drop rates (particularly, a cycle-dependent voltage drop rate due to the start-and-stop operation to be described below) of each system in a verification test in which plural systems are started and stopped under conditions of different Ni oxidation degrees at the time of the stop. In addition, Fig. 4 is a view obtained by focusing data obtained when performing the start-and-stop operation 240 times among the results of Fig. 3 and in which the horizontal axis indicates a Ni oxidation degree and the vertical axis indicates an average of voltage drop rates.

The cell voltage drop rate is expressed by an initial voltage $V_{ini}$ and a voltage $V_{final}$ after service life (or after an accelerated durability test on the assumption of service life), that is, expressed as "$(1 - V_{final} / V_{ini}) \times 100$ [%]", based on voltage summation V of the cell stack under a rated equivalent operation condition (generally, at the time of the current sweep of 0.2 to 0.3 A/cm$^2$).

From the results of Fig. 3 and Fig. 4, in the system having a high Ni oxidation degree after the stop, the cell voltage drop rate is large and a change thereof is rapid. In order to improve durability, it can be understood that it is effective to suppress the Ni oxidation degree after the stop to be low.

Incidentally, in general, the service life required for a household stationary fuel-cell system is at least 10 years and preferably 15 years. If cases of stop by a user's choice, stop corresponding to an operation of a gas meter provided in a fuel utility line, or stop at the time of emergency or maintenance are included, the number of times of the start-and-stop operation to be envisioned for 10 years is estimated to be 240 times. Therefore, the system is also required to be resistant to at least 240 times of the start-and-stop operation.

In view of the fuel-cell system as an energy saving device, an acceptable total voltage drop rate is at most 15% and preferably 10% or less.

The total voltage drop rate includes: (1) a temporal voltage drop due to the long-term use (cell thermal degradation or the like); (2) a cycle-dependent voltage drop due to the start-and-stop operation; and (3) a voltage drop due to usage environment such as incorporation of impurities. However, among these, the invention focuses on "(2) a cycle-dependent voltage drop due to the start-and-stop operation".

Therefore, in Fig. 3 and Fig. 4, the cycle-dependent voltage drop rate due to the start-and-stop operation is simply referred to as the "voltage drop rate" and this is considered as an index of durability maintenance.

Specifically, a voltage drop rate, which is substantially influenced only by the start-and-stop operation, can be distinguish by measuring a voltage drop rate dependent on the number of times of the start-and-stop operation by a start-and-stop cycle test or the like and subtracting, from the measured value, a voltage drop rate estimated by a continuous operation test, an impurity incorporation test, or the like which is separately carried out.

If effects due to multiple factors are taken into consideration, the (narrowly-defined) voltage drop rate due to the 240 times of the start-and-stop operation is at most 5% and preferably 3% or less.

Thus, it is desirable to suppress the Ni oxidation degree after the stop to a lower level so that the voltage drop rate due to 240 times of the start-up and stop operation is 5% or less, and preferably, 3% or less.

However, it is difficult to measure the Ni oxidation degree by the actual device and to directly reflect the Ni oxidation degree in the control.

Therefore, there is a problem concerning how the power generation stop can be performed without increasing the Ni oxidation degree, and in order to solve this problem, a stopping method of allowing the Ni oxidation degree after the power generation stops to be suppressed within a predetermined threshold value is suggested in relation to, for example, a minimum oxidation temperature of nickel metal.

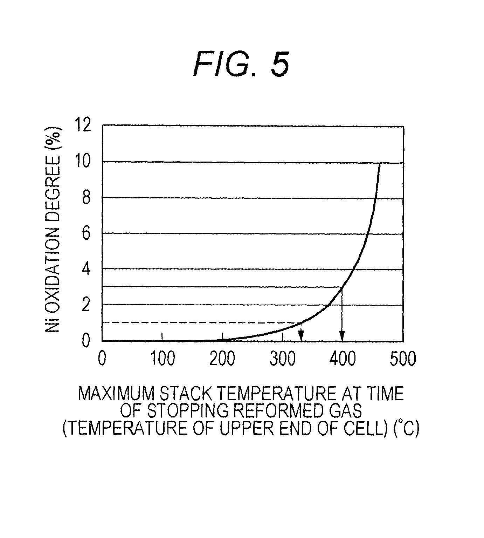

Fig. 5 illustrates a result obtained by measuring Ni oxidation degrees at each temperature of the upper end of the cell support 21 (maximum stack temperature at the time of stopping the reformed gas) that is the maximum temperature portion of the fuel cell stack 10 when the reformed gas is stopped at the stop process of the SOFC system (when the supply of the fuel gas to the reformer 6 is stopped and then the supply of the reformed gas to the fuel cell stack 10 is stopped).

From the view of Fig. 5, it is clear that the maximum stack temperature (cell upper end temperature) at the time of stopping the reformed gas needs to be set at 400°C or lower (preferably, 330°C or lower) in order to suppress the Ni oxidation degree to be low. Therefore, this temperature can be determined as the "minimum oxidation temperature of nickel metal".

Therefore, regarding the stop control of the SOFC system, the fuel supply amount or the air supply amount to the fuel cell stack is appropriately controlled until the maximum stack temperature is below the minimum oxidation temperature of nickel metal, so that the Ni oxidation degree after the stop is suppressed to be within a predetermined threshold value.

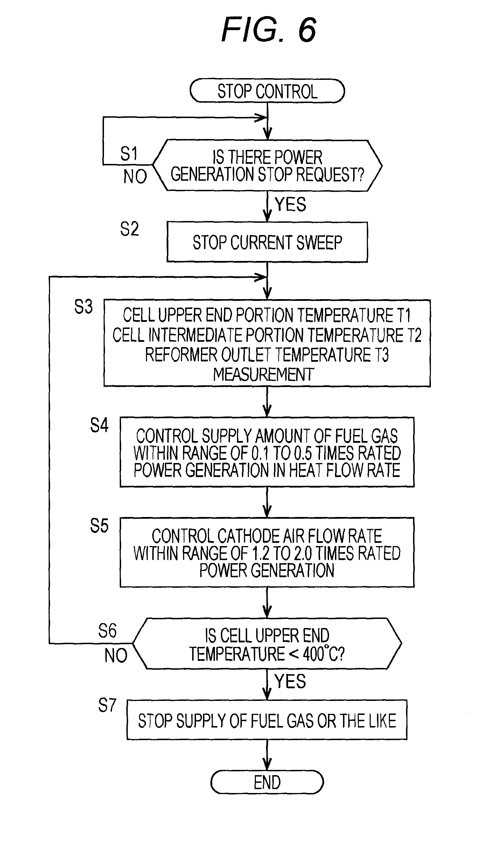

Fig. 6 is a flowchart of the stop control of the SOFC system using the control device 100 illustrated as an embodiment of the invention.

In S1, it is determined whether there is a power generation stop request, and when there is a power generation stop request, the process proceeds to S2.

In S2, the current sweep is stopped by opening the power generation circuit. The power generation is thereby stopped. Thereafter, the process proceeds to S3.

In S3, a cell upper end portion temperature T1, a cell intermediate portion temperature T2, and a reformer outlet temperature T3 are measured by temperature sensors arranged in the right places in the hot module 1 as necessary. The cell upper end portion temperature T1 is a temperature of the upper end portion of the cell support 21 serving as a combustion portion, and is a temperature (maximum stack temperature) of the maximum temperature portion of the fuel cell stack 10. The cell intermediate portion temperature T2 is a temperature of the intermediate portion in a longitudinal direction (vertical direction) of the cell support 21 and is an average temperature of the fuel cell stack 10. The reformer outlet temperature T3 is a temperature of the reformed gas outlet of the reformer 6 and is used to measure a representative temperature (reaction temperature of the reforming catalyst) of the reformer 6. Furthermore, T1 to T3 in Fig. 1 denote the measurement points thereof.

In S4, the supply amount of fuel gas (reformed gas) to the fuel cell stack 10 from the reformer 6 is controlled within the range of 0.1 to 0.5 times that during the system rated power generation in terms of the heat flow rate (J/min). More specifically, the supply amount of fuel and water to the reformer 6 is controlled by using a supply amount control means (not illustrated) provided in the supply tube 3 of fuel and water, so that the supply amount of fuel gas (reformed gas) to the fuel cell stack 10 from the reformer 6 is controlled. This step functions as a fuel control unit (control means) during stop process in the control device 100.

At the same time, in S5, the supply amount (cathode air flow rate) of air to the fuel cell stack 10 is controlled in the range of 1.2 to 2.0 times that during the system rated power generation. More specifically, the supply amount is controlled by using a supply amount control means (not illustrated) provided in the supply tube 4 of the cathode air. The air control used here is performed so that the temperature difference between the temperature (cell upper end portion temperature T1) of the maximum temperature portion of the fuel cell stack and the temperature (reformer outlet temperature T3) of the reformer is within 80°C. This step functions as an air control unit (control means) during stop process in the control device 100.

Furthermore, the control in S4 and S5 may be performed so that the supply amount of fuel gas (reformed gas) to the fuel cell stack 10 from the reformer 6 is fixedly controlled to a constant value within the range of 0.1 to 0.5 times that during the system rated power generation, for example, 0.3 times in terms of the heat flow rate, and the supply amount of air (cathode air flow rate) to the fuel cell stack 10 is fixedly controlled to a constant value within the range of 1.2 to 2.0 times that during the system rated power generation, for example, 1.6 times. However, a fuel and air may be variably controlled depending on the temperatures T1 to T3, the elapsed time or the like within each control range, and for example, the supply amount of the fuel gas may be reduced and the supply amount of air may be reduced within the control range according to the temperature drop caused in response to the elapsed time.

In S6, the cell upper end portion temperature T1 is compared with 400°C that is a minimum oxidation temperature of the nickel metal, and it is determined whether T1 < (less than) 400°C.

In the case of T1 ≥ (greater than or equal to) 400°C, the process returns to S3, S4, and S5 to continue the control, and at the time of T < (less than) 400°C, the process proceeds to S7.

In S7, the supply of fuel and water to the reformer 6 is stopped, and the supply of reformed gas to the fuel cell stack 10 is stopped at the same time. Although not illustrated in the flowchart, even after that, the cell temperature is monitored, and when reaching the room temperature or ambient temperature, the system is completely stopped.

During the stop process as described above, the temperature drop of the system is performed, but until the temperature of the fuel cell stack 10 falls below the minimum oxidation temperature of the cell support 21, there is a need to set a portion of the cell support 21 to a sufficient reducing atmosphere. Therefore, even during temperature drop, a fuel is supplied in a similar manner as that during the power generation, and the hydrogen-containing gas is produced by the reformer 6 and is supplied to the fuel cell stack 10. However, the current sweep is not performed.

When the temperature of the fuel cell stack 10 is equal to or higher than the minimum oxidation temperature of the cell support 21, if the hydrogen partial pressure of the gas is too low, the oxidation of the cell support 21 proceeds. After the next start-up, when the hydrogen-containing gas is supplied again, power can be generated by reduction, but the durability of the fuel cell 20 is lowered by being repeatedly subjected to the oxidation and the reduction. In this case, as a household fuel cell system, it is necessary to secure the durability of 240 times or more of start-up and stop operation for more than 10 years.

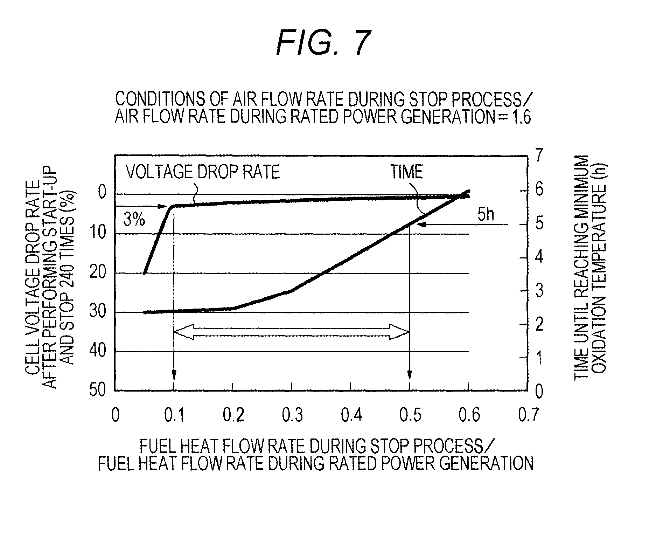

In Fig. 7, a horizontal axis represents the fuel heat flow rate during stop process/fuel heat flow rate during rated power generation, and a vertical axis represents the cell voltage drop rate (%) after performing the start-up and stop operation 240 times and the time (h) that is required to reach the minimum oxidation temperature (400°C). Furthermore, in the cathode air flow rate, the conditions of the air flow rate during stop process/air flow rate during rated power generation = 1.6 were adopted.

It was found that, as the fuel heat flow rate during stop process/fuel heat flow rate during rated power generation is set to 0.1 or more, it is possible to obtain the cell voltage drop rate due to the start-up and stop operation within 3%, and when less than 0.1, since the voltage drop rate markedly increases, it is necessary to set the rate to be in a range of 0.1 or more.

The reason that, when the fuel heat flow rate during stop process/fuel heat flow rate during rated power generation is less than 0.1, the cell voltage drop rate after performing 240 times of the start-up and stop operation of markedly increases is as follows. When the fuel supply amount during stop process decreases, since an inflow amount from one end (lower end) side to the gas passage of the cells forming the fuel cell stack decreases, air diffusion from the other end (upper end) side of the gas passage increases, and the oxidation degree of the nickel metal in the cell support partially increases accordingly. Therefore, it is considered that, since the oxidation degree during stop increases even partially, by repeating the start-up and stop operation and being repeatedly subjected to the oxidation and the reduction, the degree of damage to the fuel cells (or the fuel cell stack) due to oxidation and reduction increases, which causes a drop of the cell voltage.

Of course, even when the fuel heat flow rate during stop process/fuel heat flow rate during rated power generation is 0.1 or more, there is a possibility that oxidation of the nickel metal in the cell support is caused. However, it is considered that it is possible to suppress the abovementioned partial oxidation using 0.1 as the threshold value, and it is possible to avoid damage to the cells leading to great performance degradation (drop of the cell voltage).

Meanwhile, there is a possibility that energy-saving characteristics may not be secured in a case in which the stop time is extended or input energy during the stop increases by an increase in fuel during the stop. As the household energy-saving products, it is necessary to set the time that is required to fall below the minimum oxidation temperature within 5 hours. Therefore, there is a need for the time to be set below 0.5.

Thus, it is preferred that the fuel heat flow rate during stop process/fuel heat flow rate during rated power generation be within the range of 0.1 to 0.5.

Furthermore, in order to produce the hydrogen-containing gas by the reformer 6 and supply the gas to the fuel cell stack 10, there is a need to satisfy reforming conditions of the reformer 6. In other words, in order that the reformer 6 reforms all the compounds with 2 carbon atoms or more included in a raw fuel, into hydrogen, $CH_4$, CO, and $CO_2$ by the reforming catalyst, a sufficient reaction speed is necessary, and thus, in the normal steam reforming method, the reformer outlet temperature needs to be 250°C or higher, and more preferably 320°C or higher. Temperatures of the fuel cell stack 10 and the reformer 6 are lowered by the system stop, but it is usual to set a relationship of the temperature (maximum stack temperature) of the maximum temperature portion of the fuel cell stack > (greater than) reformer outlet temperature.

When the maximum stack temperature reaches about 400°C that is the minimum oxidation temperature, if a temperature difference between the maximum stack temperature and the temperature of the reformer outlet is 80°C or more, the reforming temperature is too low, and there is a possibility of slip of the compounds with 2 carbon atoms or more included in a raw fuel, or when stopping the supply of fuel, there is a possibility of progression of oxidation of the stack. For this reason, there is a need to set the temperature difference to 80°C or less. It was found that the air control is effective as a method for controlling the temperature difference.

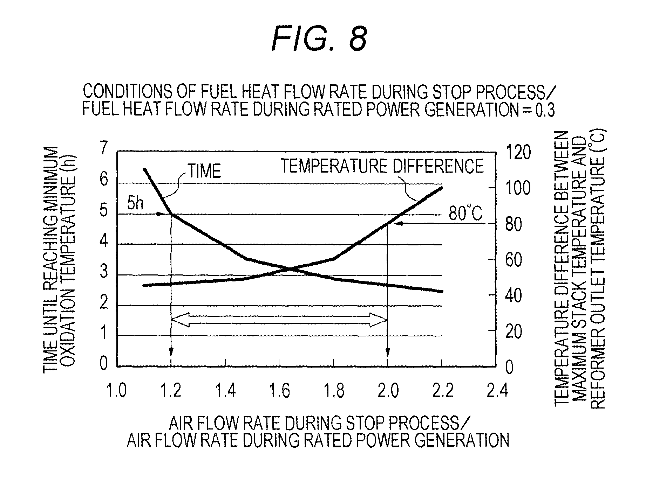

In Fig. 8, a horizontal axis represents the air flow rate during stop process/air flow rate during rated power generation, and a vertical axis represents the time (h) that is required to reach the minimum oxidation temperature (400°C) and the temperature difference (°C) between the maximum stack temperature and the reformer outlet temperature. Furthermore, in the fuel heat flow rate, the conditions of the fuel heat flow rate during stop process/fuel heat flow rate during rated power generation = 0.3 were adopted.

It was found that, as the air flow rate during stop process/air flow rate during rated power generation is set 2.0 or less, the temperature difference between the maximum stack temperature and the reformer outlet temperature is 80°C or less. Meanwhile, it was found that if the air flow rate during stop process/air flow rate during rated power generation is too small, extension of the stop time (that is required to reach the minimum oxidation temperature) was appeared, and it is necessary to set the air flow rate during stop process/air flow rate during rated power generation to 1.2 or more.

Therefore, it is preferred that the air flow rate during stop process/air flow rate during rated power generation be within the range of 1.2 to 2.0.

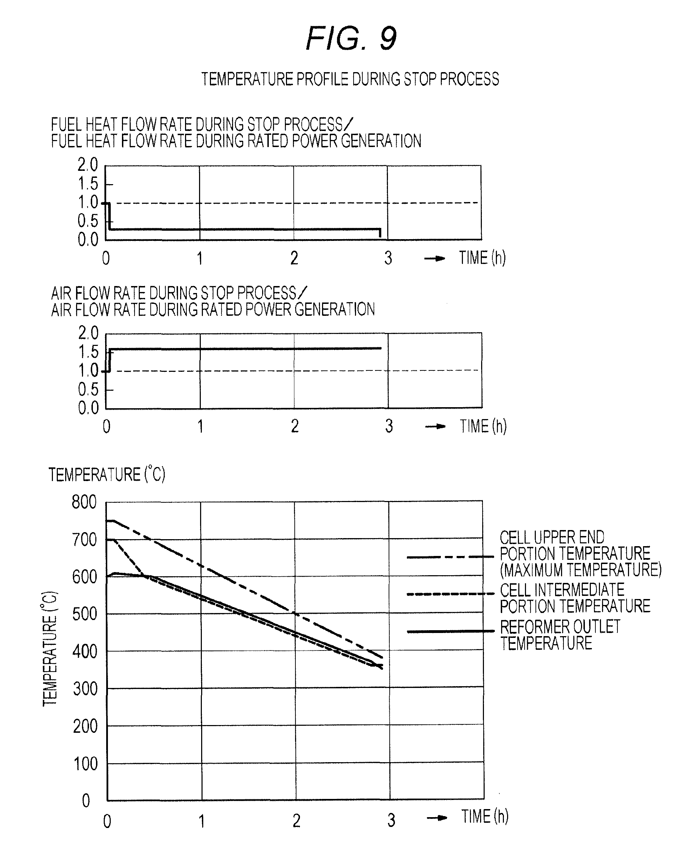

Fig. 9 illustrates the temperature profile under the conditions of the fuel heat flow rate during stop process/fuel heat flow rate during rated power generation = 0.3 and the air flow rate during stop process/air flow rate during rated power generation = 1.6.

Thus, it was understood that, when the maximum stack temperature (cell upper end portion temperature) falls below 400°C, the temperature difference between the maximum stack temperature (cell upper end portion temperature) and the reformer outlet temperature is kept approximately at 50°C, and the reformer outlet temperature is kept at 350°C or more. The stop time (that is required to reach the minimum oxidation temperature) of this case was approximately 3 hours. In addition, it was understood that the cell intermediate portion temperature changes in the substantially same manner as in the reformer outlet temperature in the stop process.

According to the invention, the supply amount of the fuel gas to the fuel cell stack is controlled within the range of 0.1 to 0.5 times that during the system rated power generation in terms of the heat flow rate until the temperature of the maximum temperature portion of the fuel cell stack falls below the minimum oxidation temperature (about 400°C) of the nickel metal in the cell support, and thus, it is possible to suppress a significant decrease of the cell voltage even when performing the start-up and stop 240 times or more (twice a month for 10 years) to withstand the practical use, and it is possible to secure the durability. Furthermore, it is possible to avoid the extension of time that is required to fall below the minimum oxidation temperature after the power generation stops, and it is possible to secure the maintenance characteristics and the energy saving characteristics of the SOFC system.

In addition, when the temperature of the maximum temperature portion of the fuel cell stack becomes the minimum oxidation temperature (about 400°C), the temperature difference between the temperature of the maximum temperature portion of the fuel cell stack and the temperature of the reformer is set within 80°C by the control of the cathode air flow rate, and thus, it is possible to set the temperature of the maximum temperature portion of the fuel cell stack below 400°C when the temperature of the reformer becomes 250 to 320°C that are a minimum reformable temperature. That is, when the reformer (reforming catalyst) reaches the minimum reformable temperature, it is necessary that all parts of the fuel cell stack fall below the minimum oxidation temperature, however, it is possible to satisfy this.

In the abovementioned embodiment, the method of measuring a "cell upper end portion temperature T1" that is the temperature of the maximum temperature portion of the fuel cell stack 10 and using the values thereof in the control has been described, however, as long as a temperature sensor is provided at an arbitrary area in the hot module 1 (for example, an air flow area in the hot module illustrated as T4 in Fig. 1) to measure the temperature T4 of the area and find out a relationship between the temperature T4 and the cell upper end portion temperature (maximum stack temperature) T1, the control may be performed by using the temperature T4.

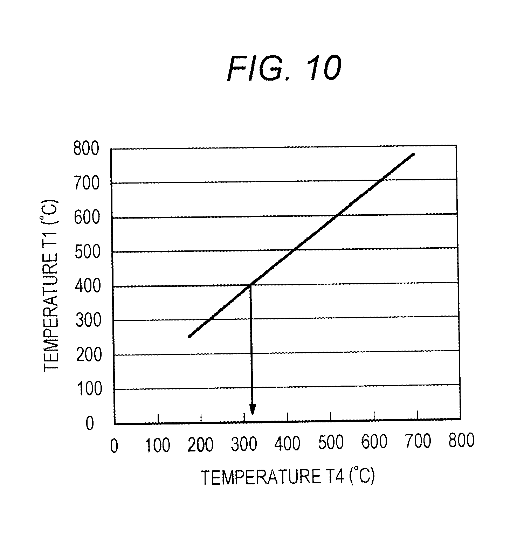

Fig. 10 illustrates a correlation view between the temperature T1 and the temperature T4. In this case, since when T1 is 400°C, T4 is 320°C, the temperatures can be used as a control threshold value of the "minimum oxidation temperature of nickel metal". If this becomes apparent once, it is possible to carry out the invention as a system in which the temperature sensors of T1 and T2 are removed and only the temperature sensor T4 is installed.

Incidentally, the embodiments illustrated in the figures are merely examples of the present invention, and of course, the invention includes those directly specified by the described embodiments, as well as various improvements and modifications, which can be conceived by one skilled in the art within the scope of the appended claims.

REFERENCE SIGNS LIST

| | |
|---|---|
| 1 | Hot module |
| 2 | Module case |
| 3 | Supply tube of fuel, water, and air for ATR |
| 4 | Supply tube of air for cathode |
| 5 | Exhaust port |
| 6 | Reformer |
| 7 | Reformed gas supply tube |
| 8 | Manifold |
| 10 (10-1, 10-2) | Fuel cell stack |
| 20 | Fuel cell |
| 21 | Cell support |
| 22 | Gas passage |
| 23 | Fuel electrode layer |
| 24 | Solid oxide electrolyte layer |
| 25 | Air electrode layer |
| 26 | Interconnector |
| 30 | Collector member |
| 40 | Conductive member |

100 Control device

**Claims**

1. A method for stopping a solid oxide fuel cell system configured to include: a reformer that generates a hydrogen-enriched fuel gas by a reforming reaction; a fuel cell stack that allows the fuel gas from the reformer to react with air to generate power; and a module case that surrounds the reformer and the fuel cell stack, in the inside of which an excessive fuel gas of the fuel cell stack is combusted to maintain the reformer and the fuel cell stack in a high temperature state, in which each cell forming the fuel cell stack is made of a porous material having a composition containing at least nickel metal, includes a cell support having a gas passage through which a fuel gas from the reformer flows from one end to the other end on the inside thereof, and is formed by stacking a fuel electrode layer, a solid oxide electrolyte layer, and an air electrode layer on the cell support, and the excessive fuel gas is combusted at the other end of the gas passage,

   wherein a supply amount of the fuel gas to the fuel cell stack is controlled within a range of 0.1 to 0.5 times that during a system rated power generation in terms of a heat flow rate, until a temperature of a maximum temperature portion of the fuel cell stack falls below a minimum oxidation temperature of the nickel metal in the cell support after power generation stops.

2. The method for stopping the solid oxide fuel cell system according to claim 1,
   wherein, when the temperature of the maximum temperature portion of the fuel cell stack reaches the minimum oxidation temperature, a temperature difference between the temperature of the maximum temperature portion of the fuel cell stack and the temperature of the reformer is set within 80°C, by controlling the supply amount of air to the fuel cell stack within a range of 1.2 to 2.0 times that during the system rated power generation after the power generation stops.

3. The method for stopping the solid oxide fuel cell system according to claim 1,
   wherein a temperature of the other end of the cell support is measured as the temperature of the maximum temperature portion of the fuel cell stack.

4. The method for stopping the solid oxide fuel cell system according to claim 1,
   wherein an outlet temperature of the reformer is measured as the temperature of the reformer.

5. A stopping apparatus for a solid oxide fuel cell system comprising:

   a reformer configured to generate a hydrogen-enriched fuel gas by a reforming reaction;
   a fuel cell stack configured to allow the fuel gas from the reformer to react with air to generate power; and
   a module case that surrounds the reformer and the fuel cell stack, in the inside of which an excessive fuel gas of the fuel cell stack is combusted to maintain the reformer and the fuel cell stack in a high temperature state,
   wherein each cell forming the fuel cell stack is made of a porous material having a composition containing at least nickel metal, includes a cell support having a gas passage through which a fuel gas from the reformer flows from one end to the other end on the inside thereof, and is formed by stacking a fuel electrode layer, a solid oxide electrolyte layer, and an air electrode layer on the cell support, and the excessive fuel gas is combusted at the other end of the gas passage, and
   wherein the stopping apparatus is provided with a fuel control unit during stop process that controls a supply amount of the fuel gas to the fuel cell stack within a range of 0.1 to 0.5 times that during a system rated power generation in terms of a heat flow rate, until a temperature of a maximum temperature portion of the fuel cell stack falls below a minimum oxidation temperature of the nickel metal in the cell support after power generation stops.

6. The stopping apparatus for the solid oxide fuel cell system according to claim 5, further comprising:

   an air control unit during stop process that sets so that a temperature difference between the temperature of the maximum temperature portion of the fuel cell stack and the temperature of the reformer is within 80°C when the temperature of the maximum temperature portion of the fuel cell stack reaches the minimum oxidation temperature, by controlling the supply amount of air to the fuel cell stack within a range of 1.2 to 2.0 times that during the system rated power generation after the power generation stops.

# FIG. 1

FUEL, WATER →

ATR AIR →

REFORMER

COMBUSTION PORTION

MANIFOLD

CATHODE AIR

EXHAUST GAS

CONTROL DEVICE — 100

# FIG. 2

# FIG. 3

CORRELATION BETWEEN Ni OXIDATION
DEGREE AND CELL VOLTAGE DROP RATE

o OXIDATION DEGREE 0.8%
△ OXIDATION DEGREE 1.2%
□ OXIDATION DEGREE 2.8%
× OXIDATION DEGREE 3.3%
∗ OXIDATION DEGREE 10%

NUMBER OF START-UP
AND STOP (TIMES)

# FIG. 4

CORRELATION BETWEEN Ni OXIDATION
DEGREE AND VOLTAGE DROP RATE AFTER
PERFORMING START-UP AND STOP 240 TIMES

# FIG. 5

MAXIMUM STACK TEMPERATURE AT TIME
OF STOPPING REFORMED GAS
(TEMPERATURE OF UPPER END OF CELL) (°C)

# FIG. 6

```
                    ( STOP CONTROL )
                            │
            ┌───────────────┤
            │               ▼
       S1  ╱  IS THERE POWER  ╲
       NO ╲ GENERATION STOP REQUEST? ╱
            │
            │ YES
            ▼
       S2  ┌─────────────────────────┐
           │   STOP CURRENT SWEEP     │
           └─────────────────────────┘
            │
     ┌──────┤
     │      ▼
   S3 ┌──────────────────────────────────────┐
      │ CELL UPPER END PORTION TEMPERATURE T1 │
      │ CELL INTERMEDIATE PORTION TEMPERATURE T2 │
      │   REFORMER OUTLET TEMPERATURE T3      │
      │            MEASUREMENT                │
      └──────────────────────────────────────┘
     │      │
     │      ▼
   S4 ┌──────────────────────────────────────┐
      │  CONTROL SUPPLY AMOUNT OF FUEL GAS    │
      │ WITHIN RANGE OF 0.1 TO 0.5 TIMES RATED │
      │  POWER GENERATION IN HEAT FLOW RATE   │
      └──────────────────────────────────────┘
     │      │
     │      ▼
   S5 ┌──────────────────────────────────────┐
      │     CONTROL CATHODE AIR FLOW RATE     │
      │ WITHIN RANGE OF 1.2 TO 2.0 TIMES RATED │
      │        POWER GENERATION              │
      └──────────────────────────────────────┘
     │      │
     │      ▼
   S6 ╱    IS CELL UPPER END      ╲
   NO ╲  TEMPERATURE < 400°C?     ╱
     │      │
     └──────┤ YES
            ▼
   S7 ┌──────────────────────────────────────┐
      │  STOP SUPPLY OF FUEL GAS OR THE LIKE  │
      └──────────────────────────────────────┘
            │
            ▼
         ( END )
```

# FIG. 7

CONDITIONS OF AIR FLOW RATE DURING STOP PROCESS/
AIR FLOW RATE DURING RATED POWER GENERATION = 1.6

FUEL HEAT FLOW RATE DURING STOP PROCESS/
FUEL HEAT FLOW RATE DURING RATED POWER GENERATION

# FIG. 8

CONDITIONS OF FUEL HEAT FLOW RATE DURING STOP PROCESS/
FUEL HEAT FLOW RATE DURING RATED POWER GENERATION = 0.3

# FIG. 9

TEMPERATURE PROFILE DURING STOP PROCESS

FUEL HEAT FLOW RATE DURING STOP PROCESS/
FUEL HEAT FLOW RATE DURING RATED POWER GENERATION

AIR FLOW RATE DURING STOP PROCESS/
AIR FLOW RATE DURING RATED POWER GENERATION

TEMPERATURE (°C)

CELL UPPER END PORTION TEMPERATURE (MAXIMUM TEMPERATURE)

CELL INTERMEDIATE PORTION TEMPERATURE

REFORMER OUTLET TEMPERATURE

## FIG. 10

## INTERNATIONAL SEARCH REPORT

| International application No. |
| --- |
| PCT/JP2012/078723 |

A. CLASSIFICATION OF SUBJECT MATTER
*H01M8/04*(2006.01)i, *H01M8/02*(2006.01)i, *H01M8/06*(2006.01)i, *H01M8/12*
(2006.01)i

According to International Patent Classification (IPC) or to both national classification and IPC

B. FIELDS SEARCHED

Minimum documentation searched (classification system followed by classification symbols)
H01M8/04, H01M8/02, H01M8/06, H01M8/12

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2011-96432 A  (Kyocera Corp.),<br>12 May 2011 (12.05.2011),<br>paragraphs [0020] to [0028], [0072] to [0079];<br>fig. 1, 3, 4<br>(Family: none) | 1,3-5 |
| Y | JP 2006-294508 A  (Mitsubishi Materials Corp.),<br>26 October 2006 (26.10.2006),<br>paragraphs [0015] to [0028]; fig. 1, 3<br>& US 2011/0076573 A1      & EP 1852930 A1<br>& WO 2006/090685 A1      & AT 542255 T | 1,3-5 |
| Y | JP 2005-158529 A  (Kyocera Corp.),<br>16 June 2005 (16.06.2005),<br>paragraph [0057]<br>(Family: none) | 1,3-5 |

| ☒ | Further documents are listed in the continuation of Box C. | ☐ | See patent family annex. |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 28 January, 2013 (28.01.13) | 05 February, 2013 (05.02.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2012/078723 |

**C (Continuation).   DOCUMENTS CONSIDERED TO BE RELEVANT**

| Category* | Citation of document, with indication, where appropriate, of the relevant passages | Relevant to claim No. |
| --- | --- | --- |
| Y | JP 2011-9105 A  (TOTO Ltd.), 13 January 2011 (13.01.2011), paragraphs [0041], [0051], [0055]; fig. 3 (Family: none) | 3,4 |
| A | JP 2008-66307 A  (Mitsubishi Heavy Industries, Ltd.), 21 March 2008 (21.03.2008), paragraphs [0032] to [0039] (Family: none) | 1-6 |
| A | JP 2009-295380 A  (Nippon Oil Corp.), 17 December 2009 (17.12.2009), paragraphs [0038] to [0042], [0056], [0084] (Family: none) | 1-6 |
| A | JP 2010-287424 A  (JX Nippon Oil & Energy Corp.), 24 December 2010 (24.12.2010), paragraphs [0039] to [0044], [0052], [0081] & EP 2418721 A1      & WO 2010/117033 A1 & CA 2758153 A      & CN 102365779 A & KR 10-2012-0007023 A | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4565980 B